# EUROPÄISCHE PATENTSCHRIFT

(11) **EP 1 558 621 B1**
(45) Veröffentlichungstag und Bekanntmachung des Hinweises auf die Patenterteilung: **23.01.2008**
(21) Anmeldenummer: 03779823.8
(22) Anmeldetag: 30.10.2003
(51) Int. Cl.: C07F 15/00

(54) **VERFAHREN ZUR HERSTELLUNG VON PALLADIUM(0)-HALTIGEN VERBINDUNGEN**
METHODS FOR THE PREPARATION OF COMPOUNDS CONTAINING PALLADIUM (0)
PROCÉDÉS DE PRODUCTION DE COMPOSES CONTENANT DU PALLADIUM(0)

(30) Priorität: 31.10.2002 DE 10250901
(43) Veröffentlichungstag der Anmeldung: 03.08.2005
(73) Patentinhaber: Umicore AG & Co. KG, 63457 Hanau-Wolfgang (DE)
(72) Erfinder: KAYSER, Bernd, 80335 München (DE); KARCH, Ralf, 63801 Kleinostheim (DE); BRIEL, Oliver, 63067 Offenbach (DE); KLEINWÄCHTER, Ingo, 63457 Hanau (DE)
(74) Vertreter: Vossius & Partner
(86) Internationale Anmeldenummer: PCT/EP2003/012085
(87) Internationale Veröffentlichungsnummer: WO 2004/039819

(56) Entgegenhaltungen:
- DE-A- 4 020 689
- DE-A- 10 051 316
- DE-A- 10 062 577
- KRAUSE J. ET AL.: "Hepta-1,6-diene and diallyl ether complexes of paladium (0) and platinum(0): a rout to L-M(alkene)2 complexes containing non-activated alkenes" CHEM. COMMUN., Nr. 12, 1998, Seiten 1291-1292, XP002274244 in der Anmeldung erwähnt
- KRAUSE J. ET AL.: "1,6-Diene Complexes of Pd(0) and Pt(0): Highly Reactive Sources for the Naked Metals and [L-M°] Fragments" J. AM. CHEM. SOC., Nr. 121, 1999, Seiten 9807-9823, XP002274245 in der Anmeldung erwähnt
- MENDEZ, MARIA ET AL: "Intramolecular coupling of allyl carboxylates with allyl stannanes and allyl silanes: a new type of reductive elimination reaction?" CHEMISTRY--A EUROPEAN JOURNAL , 8(16), 3620-3628 CODEN: CEUJED; ISSN: 0947-6539, 16. August 2002 (2002-08-16), XP002274246
- JOLLY, P. W. ET AL: "Intermediates in the palladium-catalyzed reactions of 1,3-dienes. The reaction of (.eta.1,.eta.3-octadiendiyl)palladium complexes with acidic substrates" ORGANOMETALLICS , 5(3), 473-81 CODEN: ORGND7; ISSN: 0276-7333, 1986, XP002274247
- MORENO-MANAS, MARCIAL ET AL: "15- and 30-Membered polyolefinic macrocycles. Periphery modification by aromatic nucleophilic substitution of fluorine" TETRAHEDRON , 58(39), 7769-7774 CODEN: TETRAB; ISSN: 0040-4020, 23. September 2002 (2002-09-23), XP0004381426

## Beschreibung

Die vorliegende Erfindung betrifft ein Verfahren zur Herstellung Palladium(0)-haltiger Verbindungen und damit erhältliche Palladium(O)-haltige Verbindungen.

Palladium in Form seiner Verbindungen findet als Katalysator in zahlreichen industriellen Prozessen Verwendung.

Mehr als 80% der industriell produzierten Chemikalien werden durch katalytische Prozesse hergestellt. Katalytische Prozesse sind im allgemeinen ökonomischer und umweltfreundlicher als entsprechende stöchiometrische organische Reaktionen. Für das Erreichen von hohen Ausbeuten und Selektivitäten bei homogenkatalytischen Prozessen müssen vielfältige Ligandensysteme eingesetzt werden, was im Gegenzug nach vielfältig verwendbaren Precursormetallverbindungen verlangt. Die Notwendigkeit zur ständigen Verbesserung der Katalysatorsysteme und ihrer Herstellungsverfahren wird hierdurch deutlich.

Für diese Anwendungen bieten sich insbesondere Palladiumverbindungen, die Palladium in der Oxidationsstufe 0 enthalten, an. Palladium(0)-Verbindungen werden i.A. durch Verbindungen, die ein freies Elektronenpaar koordinativ zur Verfügung stellen können, stabilisiert. Dieses freie Elektronenpaar kann beispielsweise durch einen ungesättigten Kohlenwasserstoff oder durch Heteroatome, wie Phosphor oder Stickstoff, zur Verfügung gestellt werden. Stabil lagerbare Verbindungen sind vornehmlich nur in fester Form kommerziell erhältlich.

In der Katalyse sind jedoch solche Verbindungen erwünscht, welche in flüssiger Form vorliegen. Dies erleichtert stark die Anwendbarkeit. Oftmals werden hierzu feste Verbindungen in einem Lösungsmittel gelöst, wobei Lösungen von festen Pd(0)-Verbindungen meist instabil sind und unverzüglich eingesetzt werden müssen.

Bei homogenkatalytischen Anwendungen werden bevorzugt solche Verbindungen als Precursoren verwendet, die auf einfache Art und Weise mit Liganden, wie z.B. verschiedenen Phosphinen gemischt werden können, um vielfältige Katalysesysteme herstellen zu können. Dies wird z.B. im Falle der mit ungesättigten Kohlenwasserstoffliganden stabilisierten Pd(0)-Verbindungen realisiert.

Zahlreiche Pd(0)-Komplexe mit ungesättigten Verbindungen in der Ligandensphäre sind bekannt und z.B. in Wilkinson, Abel "Comprehensive Organometallic Chemistry", Bd. 6, S. 243ff "Complexes of Palladium (0)" beschrieben.

Durch ungesättigte Kohlenwasserstoffe stabilisierte Pd(0)-Verbindungen können nach den Liganden in durch einzähnige und durch mehrzähnige (chelatisierende) Liganden stabilisierte Komplexe unterschieden werden. Ein Beispiel für einen durch einzähnige Kohlenwasserstoffliganden stabilisierten Pd(0)-Komplex ist Pd(Ethylen)₃, welcher sich bei Raumtemperatur und an Luft zersetzt.

Stabilere Pd(0)-Verbindungen erhält man durch chelatisierende, z.B. zweizähnige, ungesättigte Kohlenwasserstoffliganden wie Diene. Diene werden nach dem Abstand der beiden Dienfunktionen in 1,4-Dienliganden, 1,5-Dienliganden, 1,6-Dienliganden, 1,7-Dienliganden usw. eingeteilt.

1,4-Dien stabilisiertes Palladium(0) findet beispielsweise in Form von 1,5-Diphenyl-1,4-pentadien-3-on (dba) als Ligand verbreitete Anwendung. Die Synthese wird u.a. von M.F. Rettig et al. in Inorg. Synth., 1990, 28 beschrieben. Das Produkt wird als schwerlöslicher Niederschlag aus der Syntheselösung isoliert. Der Feststoff ist weitgehend luftstabil, jedoch zersetzen sich Lösungen in organischen Lösungsmitteln dieser Verbindungen innerhalb von Stunden (STREM Katalog: "Chemicals for research", Catalog No. 19, 2001-2003).

In der homogenkatalytischen Anwendung wird der Einsatz dieses Komplextyps als Precursor z.B. in US-B-6,316,380 beschrieben. In EP-A-508 264 wird mit Sulfoalkylgruppen substituiertes Pd(dba)₂ in der C-C Kupplung als Homogenkatalysator eingesetzt.

Als 1,5-Dienligand stabilisiertes Pd(0) ist z.B. Pd(COD)₂ bekannt. Dieses wird in DE-A-25 55 374 aus Pd(COD)Cl₂ in Gegenwart einer metallorganischen Verbindung wie z.B. Li₂(COT) (COT = Cyclooctatetraen), Natriumnaphthalid oder aluminoorganischen Verbindungen in nicht protonenaktiven Lösungsmitteln synthetisiert. In der obigen Patentanmeldung wird auch die Synthese von Pd(C₂H₄)₃ aus Pd(COD)₂ beschrieben. Bei Pd(COD)₂ handelt es sich um einen instabilen Feststoff, welcher sich unter atmosphärischen Bedingungen innerhalb von Stunden zersetzt. Diese Eigenschaft macht die Verbindung nur bedingt technisch nutzbar.

J. Krause, G. Cestaric, K.-J. Haack, K. Seevogel, W. Storm, K.R. Pörschke (J. Am. Chem. Soc. 1999, 121, 9807-9823 und Chem. Commun. 1998, 12, 1291) beschreiben die Synthese von molekular definiertem Hepta-1,6-dien-, Diallylether und Tetramethyldivinyldisiloxan-Palladium(0), die Beispiele für 1,6-Dienligand stabilisiertes Pd(0) sind. Die Synthese folgt weitgehend der bei Pd(COD)₂ beschriebenen Route. Es müssen sauerstofffreie Lösungsmittel zur Synthese verwendet werden und die Materialien haben Zersetzungspunkte nahe bei Raumtemperatur.

Für die homogenkatalytische Anwendung wurden 1,6-Dien-Pd(0)-Phosphin und -Carben-Komplexe identifiziert. Diese Verbindungen zeigen hohe Aktivitäten bei der industriell verwendeten Heck-Reaktion und der Suzuki C-C-Kupplungsreaktion und werden von M.G. Andreu, A. Zapf, M. Beller in Chem. Comm., 2000, 245 und in DE-A-100 62 577 beschrieben.

Im Stand der Technik werden 1,4-Dien stabilisierte Pd(0)-Verbindungen industriell eingesetzt. Diese zeigen ausreichende Stabilität, jedoch sind Lösungen dieser Verbindungen nicht lagerstabil. 1,5- und 1,6-Dien stabilisierte Pd(0)-Verbindungen sind deutlich weniger stabil als die 1,4-Dien stabilisierten Pd(0)-Verbindungen. Bei allen Dien stabilisierten Pd(0)-Verbindungen muss üblicherweise unter Inertgas und mit getrockneten, nicht protonenaktiven Lösungsmitteln gearbeitet werden, um molekular definierte Pd₂(Dien)₃- oder Pd(Dien)₂-Verbindungen zu isolieren. Außerdem werden sicherheitstechnisch bedenkliche, hochempfindliche Organolithiumverbindungen in der Synthese verwendet, was die großtechnische Nutzung aufwendig macht. Aus diesem Grund wurden diese Verbindungsklassen bisher nicht im großen Maße industriell verwendet.

Der vorliegenden Erfindung lag daher die Aufgabe zugrunde, ein neues kostengünstiges Verfahren zur Herstellung von Palladium(0)-haltigen Verbindungen bereitzustellen. Lösungen dieser Verbindungen sollen im wesentlichen thermisch und gegenüber atmosphärischen Bedingungen stabil sein. Dies ermöglicht den Zugang zu wirtschaftlichen, vielfältigen, neuen Precursoren für homogenkatalytische, heterogenkatalytische sowie komplexchemische Anwendungen.

Insbesondere betrifft die Erfindung ein Verfahren zur Herstellung einer Palladium(0)-haltigen Verbindung umfassend die Umsetzung einer Palladiumverbindung mit einer oder mehreren Verbindungen der allgemeinen Formel I in Gegenwart einer Base: 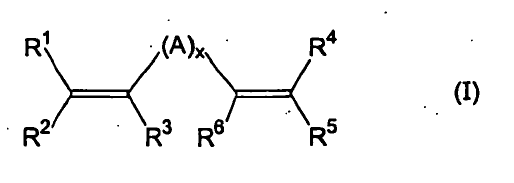 in der:
jedes A unabhängig voneinander einen CR⁷R⁸-Rest bedeutet, wobei einer der Reste A Sauerstoff, Schwefel, eine NR⁹-Gruppe oder eine SiR¹⁰R¹¹-Gruppe bedeuten kann oder wobei die Reste A Bestandteil eines 5 bis 20-gliedrigen Ringsystems sein können,
x eine ganze Zahl von 2 bis 4 bedeutet,
R¹ bis R⁶ unabhängig voneinander ausgewählt sind aus einem Wasserstoffatom, einem C₁₋₄-Alkylrest und einem halogenierten C₁₋₄-Alkylrest,
jedes R⁷ und R⁸ unabhängig voneinander ausgewählt ist aus einem Wasserstoffatom, einem C₁₋₄-Alkylrest und einem halogenierten C₁₋₄-Alkylrest,
jedes R⁹ unabhängig voneinander ausgewählt ist aus einem Wasserstoffatom, einem C₁₋₄-Alkylrest, einem halogenierten C₁₋₄-Alkylrest, einem -C(O)-C₁₋₄-Alkylrest und einem halogenierten -C(O)-C₁₋₄-Alkylrest, und
jedes R¹⁰ und R¹¹ unabhängig voneinander ausgewählt ist aus einer Hydroxygruppe, einem C₁₋₄-Alkylrest, einem -O-C₁₋₄-Alkylrest, einem halogenierten C₁₋₄-Alkylrest und einem hatogenierten-O-C₁₋₄-Alkylrest.

In einer weiteren Ausführungsform betrifft die Erfindung ein Verfahren zur Herstellung einer Palladium(0)-haltigen Verbindung umfassend die Umsetzung einer Palladiumverbindung mit einer oder mehreren cyclischen Verbindungen der allgemeinen Formel II in Gegenwart einer Base: 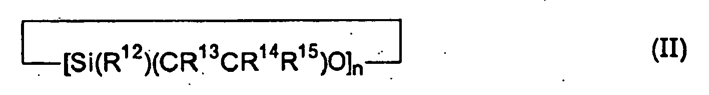 in der:
n eine ganze Zahl von 3 bis 20 bedeutet,
jedes R¹³ bis R¹⁵ unabhängig voneinander ausgewählt ist aus einem Wasserstoffatom, einem C₁₋₄-Alkylrest und einem halogenierten C₁₋₄-Alkylrest, und
jedes R¹² unabhängig voneinander aus einem Wasserstoffatom, einer Hydroxygruppe, einem substituierten oder unsubstituierten C₁₋₁₀ Alkylrest (insbesondere einem unsubstituierten oder halogenierten C₁₋₁₀ Alkylrest), einem -O-C₁₋₁₀ Alkylrest (wobei der Alkylrest substituiert oder unsubstituiert sein kann; insbesondere einem unsubstituierten oder halogenierten -O-C₁₋₁₀ Alkylrest), einem substituierten oder unsubstituierten, einfach oder mehrfach ungesättigten C₁₋₁₀-Alkenylrest oder einem substituierten oder unsubstituierten, ggf. heteroatomenthaltenden C₅₋₁₀-Arylrest ausgewählt ist und wobei die Substituenten aus Halogen, C₁₋₁₀-Alkyl, O-C₁₋₁₀-Alkyl, Phenyl, O-Phenyl, OH, und halogeniertem C₁₋₁₀-Alkyl ausgewählt sind.

In noch einer weiteren Ausführungsform betrifft die Erfindung ein Verfahren zur Herstellung einer Palladium(0)-haltigen Verbindung umfassend Umsetzung einer Palladiumverbindung mit einer oder mehreren Verbindungen der allgemeinen Formel III in Gegenwart einer Base:

Term-O-{[Si(R¹⁶)(CR¹⁹CR¹⁷R¹⁸)O]ᵥ[Si(R²⁰)₂O]_{w}}-Term (III)

in der:
v und w unabhängig voneinander 0 oder eine ganze Zahl von 1 bis 1000 bedeuten und v+w von 0 bis 1000 ist,
jedes R¹⁶ unabhängig voneinander aus einem Wasserstoffatom, einer Hydroxygruppe, einem halogenierten oder unsubstituierten C₁₋₁₀ Alkylrest einem -O-C₁₋₁₀ Alkylrest (wobei der Alkylrest halogeniert oder unsubstituiert sein kann), einem einfach oder mehrfach ungesättigten C₁₋₁₀-Alkenylrest oder einem ggf. heteroatomenthaltenden C₅₋₁₀-Arylrest ausgewählt ist,
jedes R¹⁷ bis R¹⁹ unabhängig voneinander ausgewählt ist aus einem Wasserstoffatom, einem Halogenatom, einem C₁₋₄-Alkylrest und einem halogenierten C₁₋₄-Alkylrest,
jedes R²⁰ unabhängig voneinander aus Wasserstoff, eine Hydroxygruppe, einem halogenierten oder unsubstituierten C₁₋₁₀ Alkylrest einem -O-C₁₋₁₀ Alkylrest (wobei der Alkylrest halogeniert oder unsubstituiert sein kann), einem einfach oder mehrfach ungesättigten C₁₋₁₀-Alkenylrest oder einem ggf. heteroatomenthaltenden C₅₋₁₀-Arylrest ausgewählt ist, und
jeder Rest Term unabhängig voneinander (R¹⁶)₂(CR¹⁷R¹⁸CR¹⁹)Si- oder (R¹⁶)₃Si-bedeutet.

Überraschenderweise lassen sich die vorstehend beschriebenen Verfahren im Gegensatz zu den bisher bekannten Verfahren bei Temperaturen über 0 °C durchführen. Weiterhin muss die Umsetzung nicht unter Luftausschluss oder mit getrockneten Lösungsmitteln durchgeführt werden.

In den Palladium(O)-haltigen Verbindungen liegt Palladium als Palladium(0) vor. Die Oxidationsstufe von Palladium in den Verbindungen kann nach bekannten Verfahren beispielsweise durch Umsetzung mit Neutralliganden (z.B. Phosphine), Isolierung und Charakterisierung der resultierenden Verbindung mit NMR oder durch Eindampfen der Lösung und Bestimmung der Oxidationsstufe mittels XPS erfolgen.

### Palladiumverbindung

Die als Ausgangsverbindung verwendete Palladiumverbindung ist nicht besonders beschränkt. Sie können sowohl als Feststoffe als auch als wäßrige bzw. salzsaure Lösungen eingesetzt werden. Bevorzugt werden Palladiumverbindungen mit Palladium in der Oxidationsstufe +2 oder +4 verwendet. Beispiele hierfür sind PdX₂, PdX₄, M₂PdX₄, M₂PdX₆, (NH₃)₂PdX₂ und [Pd(NH₃)₄]X₂, wobei M ein Kation (z.B.: ein Wasserstoffatom, ein Alkalimetall (insbesondere Na⁺ oder K⁺) oder NR*₄⁺ (R* = Wasserstoff, C₁₋₄ Alkyl)) bedeutet und X ein Anion (z.B.: Halogen (insbesondere Chlor), NO₃⁻) bedeutet. Besonders bevorzugte Palladiumverbindungen sind PdCl₂, PdCl₄, Pd(NO₃)₂, [Pd(NH₃)₄]Cl₂, (NH₃)₂PdCl₂, H₂PdCl₄, H₂PdCl₆, Na₂PdCl₄, Na₂PdCl₆, K₂PdCl₄ und K₂PdCl₆.

### Ligand der allgemeinen Formel I

Die Palladiumverbindung wird mit einer oder mehreren Verbindungen der allgemeinen Formel I umgesetzt

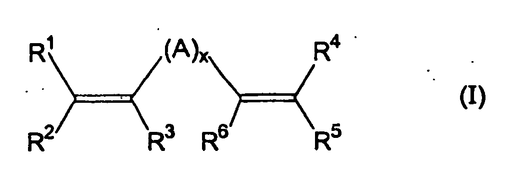

Jedes A bedeutet unabhängig voneinander einen CR⁷R⁸-Rest, wobei eines der Reste A Sauerstoff, Schwefel, eine NR⁹-Gruppe oder eine SiR¹⁰R¹¹-Gruppe bedeuten kann oder wobei die Reste A Bestandteil eines 5 bis 20-gliedrigen Ringsystems sein können.

x bedeutet eine ganze Zahl von 2 bis 4. R¹ bis R⁶ sind unabhängig voneinander Wasserstoffatome, C₁₋₄ Alkylreste oder halogenierte C₁₋₄ Alkylreste, bevorzugt sind R¹ bis R⁶ Wasserstoffatome.

R⁷ und R⁸ sind unabhängig voneinander Wasserstoffatome, C₁₋₄ Alkylreste oder halogenierte C₁₋₄ Alkylreste, bevorzugt sind R⁷ und R⁸ Wasserstoffatome.

Jedes R⁹ ist unabhängig voneinander ein Wasserstoffatom, ein C₁₋₄ Alkylrest, ein halogenierter C₁₋₄ Alkylrest, ein -C(O)-C₁₋₄ Alkylrest oder ein halogenierter-C(O)-C₁₋₄ Alkylrest.

R¹⁰ und R¹¹ sind unabhängig voneinander ausgewählt aus einer Hydroxygruppe, einem C₁₋₄ Alkylrest, einem -O-C₁₋₄ Alkylrest, einem halogenierten C₁₋₄ Alkylrest oder einem halogenierten -O-C₁₋₄ Alkylrest. Bevorzugt sind R¹⁰ und R¹¹ unabhängig voneinander ein C₁₋₄ Alkylrest oder ein halogenierter C₁₋₄ Alkylrest.

Als. Halogene werden Fluor, Chlor, Brom und Iod, bevorzugt Fluor und Chlor, bezeichnet. Die damit substituierten Reste können einfach oder mehrfach substituiert, bevorzugt perhalogeniert, sein.

Die Verbindungen der Formel I sind bevorzugt symmetrisch.

In einer Ausführungsform ist die Gruppe -(A)ₓ- bevorzugt eine Gruppe der Formel -CH₂-X-CH₂- und -X- ist aus -O-, -S-, -SiR₂-, -NR- und -NC(O)R ausgewählt, wobei R ein Wasserstoffatom, ein C₁₋₄ Alkylrest, ein halogenierter C₁₋₄ Alkylrest, ein O-C₁₋₄ Alkylrest, ein halogenierter O-C₁₋₄ Alkylrest, ein C₁₋₄-Alkenylrest oder ein ggf. heteroatomenthaltenden C₅₋₆-Arylrest bedeutet.

Veranschaulichende Beispiele für Verbindungen der allgemeinen Formel I, sind 1,5-Hexadien, 1,6-Heptadien und 1,7-Octadien. Weitere Verbindungen, die als Illustration dienen können, sind Diallylether, Diallylamin, Diallylmethylamin, Diallylethylamin, N-Acetyldiallylamin, Diallylsulfid, Diallylsilan, Diallyldimethylsilan, und 1,3-Divinylbenzol.

### Ligand der allgemeinen Formel II

Die vorliegende Erfindung stellt weiterhin ein Verfahren zur Herstellung einer Palladium(0)-haltigen Verbindung bereit, umfassend Umsetzung einer Palladiumverbindung mit einer oder mehreren Verbindungen der allgemeinen Formel II in Gegenwart einer Base:

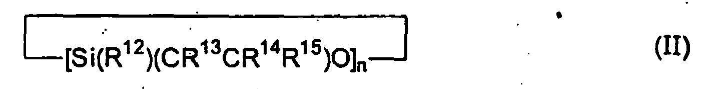

n bedeutet eine ganze Zahl von 3 bis 20, bevorzugt ist n eine ganze Zahl von 3 bis 6. R¹³ bis R¹⁵ sind unabhängig voneinander Wasserstoffatome, C₁₋₄ Alkylreste oder halogenierte C₁₋₄ Alkylreste, bevorzugt sind R¹³ bis R¹⁵ Wasserstoffatome.

Jedes R¹² ist unabhängig voneinander aus einem Wasserstoffatom, einer Hydroxygruppe, einem substituierten oder unsubstituierten C₁₋₁₀ Alkylrest (insbesondere einem unsubstituierten oder halogenierten C₁₋₁₀ Alkylrest), einem -O-C₁₋₁₀ Alkylrest (wobei der Alkylrest substituiert oder unsubstituiert sein kann; insbesondere einem unsubstituierten oder halogenierten -O-C₁₋₁₀ Alkylrest), einem substituierten oder unsubstituierten, einfach oder mehrfach ungesättigten C₁₋₁₀-Alkenylrest oder einem substituierten oder unsubstituierten, ggf. heteroatomenthaltenden C₅₋₁₀-Arylrest ausgewählt. Die Substituenten sind dabei aus Halogen, O-C₁₋₁₀-Alkyl, Phenyl, O-Phenyl, OH, und halogeniertem C₁₋₁₀-Alkyl ausgewählt. Bevorzugt ist jedes R¹² unabhängig voneinander ausgewählt aus einer Hydroxygruppe, einem C₁₋₄ Alkylrest, einem -O-C₁₋₄ Alkylrest, einem halogenierten C₁₋₄ Alkylrest oder einem halogenierten -O-C₁₋₄ Alkylrest. Besonders bevorzugt ist jedes R¹² unabhängig voneinander ein C₁₋₄ Alkylrest oder ein halogenierter C₁₋₄ Alkylrest.

Als Halogene werden Fluor, Chlor, Brom und Iod, bevorzugt Fluor und Chlor, bezeichnet. Die damit substituierten Reste können einfach oder mehrfach substituiert, bevorzugt perhalogeniert, sein.

### Ligand der allgemeinen Formel III

Die vorliegende Erfindung stellt weiterhin ein Verfahren zur Herstellung einer Palladium(0)-haltigen Verbindung bereit, umfassend Umsetzung einer Palladiumverbindung mit einer oder mehreren Verbindungen der allgemeinen Formel III in Gegenwart einer Base:

Term-O-{[Si(R¹⁶)(CR¹⁹CR¹⁷R¹⁸)O]ᵥ[Si(R²⁰)₂O]_{w}}-Term (III).

Diese Formel umfaßt sowohl Verbindungen, in denen die Einheiten [Si(R¹⁶)(CR¹⁹CR¹⁷R¹⁸)O] bzw. [Si(R²⁰)₂O] blockweise vorkommen, als auch Verbindungen, in denen die einzelnen Einheiten [Si(R¹⁶)(CR¹⁹CR¹⁷R¹⁸)O] bzw. [Si(R²⁰)₂O] statistisch in der Kette verteilt sind. Mischformen sind ebenfalls möglich.

v und w bedeuten unabhängig voneinander 0 oder eine ganze Zahl von 1 bis 1000 und v+w ist von 0 bis 1000 . Bevorzugt bedeuten v und w unabhängig voneinander 0 oder eine ganze Zahl von 1 bis 100 und v+w ist von 0 bis 100, besonders bevorzugt bedeuten v und w unabhängig voneinander 0 oder eine ganze Zahl von 1 bis 20 und v+w ist von 0 bis 20.

Jedes R¹⁶ ist unabhängig voneinander aus einem Wasserstoffatom, einer Hydroxygruppe, einem unsubstituierten oder halogenierten C₁₋₁₀ Alkylrest, einem unsubstituierten oder halogenierten -O-C₁₋₁₀ Alkylrest, einem einfach oder mehrfach ungesättigten C₁₋₁₀-Alkenylrest oder einem ggf. heteroatomenthaltenden C₅₋₁₀-Arylrest ausgewählt. Bevorzugt ist jedes R¹⁶ unabhängig voneinander ausgewählt aus einer Hydroxygruppe, einem C₁₋₄ Alkylrest, einem -O-C₁₋₄ Alkylrest, einem halogenierten C₁₋₄ Alkylrest oder einem halogenierten. -O-C₁₋₄ Alkylrest. Besonders bevorzugt ist jedes R¹⁶ unabhängig voneinander ein C₁₋₄ Alkylrest oder ein halogenierter C₁₋₄ Alkylrest.

R¹⁷ bis R¹⁹ sind unabhängig voneinander Wasserstoffatome, Halogene, C₁₋₄ Alkylreste oder halogenierte C₁₋₄ Alkylreste, stärker bevorzugt sind R¹⁷ bis R¹⁹ Wasserstoffatome.

Jedes R²⁰ ist unabhängig voneinander aus einem Wasserstoffatom, einer Hydroxygruppe, einem unsubstituierten oder halogenierten C₁₋₁₀ Alkylrest, einem unsubstituierten oder halogenierten -O-C₁₋₁₀ Alkylrest, einem einfach oder mehrfach ungesättigten C₁₋₁₀-Alkenylrest oder einem ggf. heteroatomenthaltenden C₅₋₁₀-Arylrest ausgewählt. Bevorzugt ist jedes R²⁰ unabhängig voneinander ausgewählt aus einem Wasserstoffatom, einer Hydroxygruppe, einem C₁₋₄ Alkylrest, einem -O-C₁₋₄ Alkylrest, einem halogenierten C₁₋₄ Alkylrest oder einem halogenierten -O-C₁₋₄ Alkylrest. Besonders bevorzugt ist jedes R²⁰ unabhängig voneinander ein Wasserstoffatom, ein C₁₋₄ Alkylrest oder ein halogenierter C₁₋₄ Alkylrest.

Jeder Rest Term bedeutet unabhängig voneinander (R¹⁶)₂(CR¹⁷R¹⁸CR¹⁹)Si- oder (R¹⁶)₃Si-. Bevorzugt ist der ungesättigter Rest (R¹⁶)₂(CR¹⁷R¹⁸CR¹⁹)Si-.

Als Halogene werden Fluor, Chlor, Brom und Iod, bevorzugt Fluor und Chlor, bezeichnet. Die damit substituierten Reste können einfach oder mehrfach substituiert, bevorzugt perhalogeniert, sein.

In einer bevorzugten Ausführungsform ist w gleich 0. In diesem Fall haben die Verbindungen der allgemeinen Formel (III) die folgende Form:

Term-O-[Si(R¹⁶)(CR¹⁹CR¹⁷R¹⁸)O]ᵥ-Term

wobei R¹⁶ bis R¹⁹, Term und v wie vorstehend definiert sind.

Veranschaulichende Beispiele für Verbindungen der allgemeinen Formeln II und III sind Divinyldisiloxan, 1,1,3,3-Tetramethyl-1,3-divinyldisiloxan, 1,1,3,3-Tetramethyl-1,3-dithien-2-yldisiloxan, 1,1,3,3-Tetramethoxy-1,3-divinyldisiloxan, 1,3-Dimethyl-1,3-divinyldisiloxandiol, 1,3,5,7-Tetravinyl-1,3,5,7-tetramethylcyclotetrasiloxan und 1,3,5-Trimethyl-1,3,5-trivinylcyclotrisiloxan. Besonders bevorzugt sind 1,1,3,3-Tetramethyl-1,3-divinyldisiloxan, 1,3,5,7-Tetravinyl-1,3,5,7-tetramethylcyclotetrasiloxan und 1,3,5-Trimethyl-1,3,5-trivinylcyclotrisiloxan.

Es versteht sich von selbst, dass die Palladiumverbindung mit Gemischen der Verbindungen der allgemeinen Formel I, II bzw. III umgesetzt werden kann. Bei der Umsetzung der Palladiumverbindung mit einer oder mehreren der Verbindungen der allgemeinen Formel I, II bzw. III sind bevorzugt keine weiteren Liganden zusätzlich zu den Verbindungen der allgemeinen Formel I, II bzw. III während der Umsetzung vorhanden.

### Base

Die Umsetzung der Palladiumverbindung mit einer oder mehreren Verbindungen der allgemeinen Formel I, II bzw. III geschieht in Gegenwart einer Base. Im Rahmen der Erfindung werden unter "Base" anorganische und organische Basen (bevorzugt anorganische), nicht jedoch metallorganische Basen verstanden. Die Basen sollten sich nicht in Wasser zersetzen. Geeignete Basen sind z.B. Salze von Brönstedt-Säuren. Bevorzugt werden Carbonate, Hydrogencarbonate, Acetate, Formiate, Ascorbate, Oxalate und Hydroxide verwendet. Diese können in Form ihrer Ammonium- (NR₄⁺ mit R = H oder C₁₋₄ Alkyl), Alkali- (beispielsweise Natrium oder Kalium) und Erdalkalisalze eingesetzt werden.

### Lösungsmittel

Die Umsetzung der Komponenten erfolgt üblicherweise in einem Lösungsmittel. Die Lösungsmittel sind nicht besonders beschränkt. Beispiele für mögliche Lösungsmittel sind Wasser, Alkohole, Kohlenwasserstoffe (z.B. aromatische Kohlenwasserstoffe wie Benzol und Toluol oder aliphatische Kohlenwasserstoffe wie Pentan, Hexan und Heptan), offenkettige oder cyclische Ether, Amide und Ester. Bevorzugt sind jedoch Wasser, C₁₋₆ Alkohole (z.B. C₁₋₄ Alkohole wie Methanol, Ethanol, Propanol und Butanol) und C₂₋₆ Ether als Lösungsmittel. Gemische dieser Lösungsmittel können ebenfalls eingesetzt werden.

### Reduktionsmittel

Um die Reaktion zu beschleunigen oder eine möglichst vollständige Umsetzung zu erreichen, kann die Umsetzung ggf. in Gegenwart eines Reduktionsmittels erfolgen. Als Reduktionsmittel eignen sich solche, die gegenüber der eingesetzten Palladiumverbindung ein geringeres Redoxpotential unter den gewählten Reaktionsbedingungen aufweisen. So lassen sich beispielsweise Ameisensäure und deren Salze, Oxalsäure und deren Salze, Hydrazin, Glucose, Ascorbinsäure oder Formaldehyd verwenden. Anstelle ein gesondertes Reduktionsmittel zu verwenden, ist es ebenfalls möglich ein Lösungsmittel einzusetzen, das reduzierende Eigenschaften hat.

### Durchführung des Verfahrens

Bei einer möglichen Ausführungsform des erfindungsgemäßen Verfahrens werden die Palladiumverbindung und die Verbindung der allgemeinen Formel I, II bzw. III bevorzugt in einem Lösungsmittel gelöst und die Base in der Lösung suspendiert. Die Reaktanten werden miteinander reagiert. Hierzu werden die Edukte in einen Reaktor gegeben und gerührt. Die Umsetzung kann bei einer Temperatur von -78 °C bis +200 °C, bevorzugt von -10 °C bis +100 °C und besonders bevorzugt von 0 °C bis +50 °C erfolgen. Der Druck beträgt im allgemeinen von 0,1 mbar bis 100 bar, bevorzugt von 0,2 bar bis 2 bar. Besonders bevorzugt ist Umgebungsdruck ± 0,2 bar. Die Reaktionsdauer beträgt gewöhnlich 5 Minuten bis 1 Woche, bevorzugt 5 Minuten bis 24 Stunden, besonders bevorzugt 30 Minuten bis 24 Stunden. Wie vorstehend erwähnt, ist es nicht nötig unter Luftabschluss zu arbeiten, was besonders für die großtechnische Anwendung des erfindungsgemäßen Verfahrens vorteilhaft ist.

Bezogen auf 1 Äquivalent Palladium in Form der eingesetzten Verbindung werden von 1 bis 100 Äquivalente, bevorzugt von 3 bis 100 Äquivalente, stärker bevorzugt von 8 bis 20 Äquivalente, der Verbindung der allgemeinen Formel I, II bzw. III verwendet. Die Base wird in einer Menge von 1 bis 100 Äquivalente, bevorzugt von 2 bis 100 Äquivalente, stärker bevorzugt von 2,5 bis 10 Äquivalente, bezogen auf 1 Äquivalent Palladium, eingesetzt. Falls vorhanden, kann das Reduktionsmittel in einer Menge von 1 bis 100 Äquivalente, bezogen auf 1 Äquivalent Palladium, zugesetzt werden. Anstelle ein gesondertes Reduktionsmittel zu verwenden, ist es ebenfalls möglich ein Lösungsmittel einzusetzen, das reduzierende Eigenschaften hat. In diesem Fall ist die Menge des Reduktionsmittels (Lösungsmittels) nicht besonders beschränkt, sondern es kann in einem beliebigen Überschuss bezogen auf 1 Äquivalent Palladium eingesetzt werden.

Die Palladium(0)-haltigen Verbindungen können nach der Umsetzung als solche verwendet werden. Es ist jedoch möglich die Lösungen vor der Verwendung zu reinigen und/oder zu konzentrieren. Als Reinigungsschritte kommen beispielsweise das Abfiltrieren von Nebenprodukten, die Trocknung der Lösung (z.B. mit Molekularsieben oder MgSO₄) oder die Reinigung über Aktivkohle in Frage. Die Lösung kann beispielsweise durch eine Destillation konzentriert werden.

Die mit dem erfindungsgemäßen Verfahren hergestellten Palladium(0)-haltigen Verbindungen sind auch in Form von Lösungen im allgemeinen bei Temperaturen bis 30 °C, zum Teil bis 60°C und darüber hinaus, lagerstabil und lassen sich an der Luft handhaben. Sie weisen üblicherweise einen Metallgehalt von 0,01 Gew.-% bis 40 Gew.-%, bevorzugt von 0,01 Gew.-% bis 30 Gew.-%, besonders bevorzugt von 0,01 Gew.-% bis 20 Gew.-% auf und einen Gesamthalogengehalt von maximal 5 Gew.-%, bevorzugt maximal 2 Gew.-%, besonders bevorzugt maximal 1 Gew.-% auf.

Die Palladium(0)-haltigen Verbindungen können, entweder alleine oder als Gemisch, als Precursor für Katalysatoren für organisch-chemische Reaktionen eingesetzt werden, indem man sie mit einem Liganden wie zum Beispiel Phosphinen, Phosphiten, Phosphoniten, Aminen, Alkenen, Thioethern, Alkinen oder Carbenen, die auch erst jeweils *in situ* erzeugt werden können, mischt. Diese Mischung kann direkt als Katalysator verwendet werden, oder aus der Mischung kann die resultierende Komplexverbindung nach üblichen Verfahren in Substanz gewonnen werden.

Die erfindungsgemäßen Palladium(0)-haltigen Verbindungen können, entweder alleine oder als Gemisch, auch direkt ohne Einsatz zusätzlicher Liganden als Katalysatorvorstufe in organisch-chemischen Reaktionen eingesetzt werden.

Die folgenden Beispiele sollen die Erfindung weiter erläutern. Die Erfindung ist jedoch nicht auf diese veranschaulichenden Ausführungsformen beschränkt sondern wird durch die Ansprüche definiert.

### BEISPIELE

### Allgemeine Vorschrift zur Synthese von Palladium(0)-haltigen Verbindungen

Ein Äquivalent Natriumtetrachloropalladat wurde in Methanol gelöst. Zu dieser Lösung wurden 8 Äquivalente Natriumhydrogencarbonat und 10 Äquivalente einer Verbindung der allgemeinen Formel I gegeben. Die Lösung wurde 4 Stunden gerührt. Das Methanol wurde abdestilliert und der Rückstand wurde über einem Trocknungsmittel und Aktivkohle gerührt. Die Feststoffe wurden abfiltriert und das Filtrat destillativ aufkonzentriert. Je nach Destillationsbedingungen wurden stabile palladiumhaltige Lösungen mit Palladiumgehalten von 0,01 bis 20 Gew.-% erhalten.

Nach dieser Vorschrift wurden Reaktionsgemische mit den in Tabelle 1 angegebenen Di- bis Tetraenen hergestellt.

Der Palladium- und Chlorgehalt wurden mittels ICP-OES nach Aufschluß bzw. durch Wickbold-Verbrennung bestimmt.

### Vorschrift zur Synthese von Phosphin-Dien-Pd(0)-Komplexen

Ein Palladiumäquivalent der aus der Umsetzung von 1,1,3,3-Tetramethyl-1,3-divinyldisiloxan erhaltenen palladiumhaltigen Lösung wurde mit einem Äquivalent einer 5 Gew.-%igen etherischen Tricyclohexylphosphin-Lösung versetzt. Der erhaltene Niederschlag wird abfiltriert und getrocknet. Das Produkt wurde mittels ¹H-, ³¹P- und ¹³C-NMR-Spektroskopie als Tricyclohexylphosphin-(1,1,3,3-Tetramethyl-1,3-divinyldisiloxan)-Pd(0)-Komplex identifiziert.

**Tabelle 1**

| **Dien-Komponente** | **Ausbeute [%]** | **Pd-Gehalt [%]** | **Cl-Gehalt [%]** |
|---|---|---|---|
| Bsp.1 Diallylether | 81 | 7,9 | 0,11 |
| Bsp. 2 1,5-Hexadien | 69 | 3,3 | 0,5 |
| Bsp.3 1,7-Octadien | 78 | 5,2 | 0,11 |
| Bsp.4 Diallylamin | 84 | 8,0 | 0,1 |
| Bsp.5 Diallylmethylamin | 87 | 8,0 | 0,09 |
| Bsp. 6 1,1,3,3-Tetramethyl-1,3-divinyldisiloxan | 91 | 18,6 | 0,02 |
| Bsp.7 1,3,5,7-Tetravinyl-1,3,5,7-tetramethylcyclotetrasiloxan | 94 | 2,3 | 0,03 |
| Bsp. 8 1,3,5,-Trimethyl-1,3,5-trivinylcyclotrisiloxan | 91 | 10,0 | 0,02 |

## Patentansprüche

1. Verfahren zur Herstellung einer Palladium(0)-haltigen Verbindung umfassend Umsetzung einer Palladiumverbindung mit einer oder mehreren Verbindungen der allgemeinen Formel I in Gegenwart einer Base: 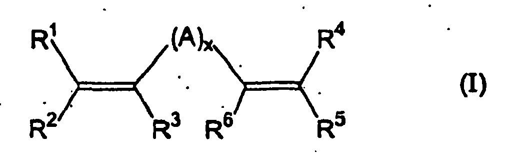 in der:
jedes A unabhängig voneinander einen CR⁷R⁸-Rest bedeutet, wobei einer der Reste A Sauerstoff, Schwefel, eine NR⁹-Gruppe oder eine SiR¹⁰R¹¹-Gruppe bedeuten kann oder wobei die Reste A Bestandteil eines 5 bis 20-gliedrigen. Ringsystems sein können,
x eine ganze Zahl von 2 bis 4 bedeutet,
R¹ bis R⁶ unabhängig voneinander ausgewählt sind aus einem Wasserstoffatom, einem C₁₋₄-Alkylrest und einem halogenierten C₁₋₄-Alkylrest,
jedes R⁷ und R⁸ unabhängig voneinander ausgewählt ist aus einem Wasserstoffatom, einem C₁₋₄Alkylrest und einem halogenierten C₁₋₄-Alkylrest,
jedes R⁹ unabhängig voneinander ausgewählt ist aus einem Wasserstoffatom, einem C₁₋₄-Alkylrest, einem halogenierten C₁₋₄-Alkylrest, einem -C(O)-C₁₋₄-Alkylrest und einem halogenierten -C(O)-C₁₋₄-Alkylrest, und
jedes R¹⁰ und R¹¹ unabhängig voneinander ausgewählt ist aus einer Hydroxygruppe, einem C₁₋₄-Alkylrest, einem -O-C₁₋₄-Alkylrest, einem halogenierten C₁₋₄-Alkylrest und einem halogenierten-O-C₁₋₄-Alkylrest.

2. Verfahren nach Anspruch 1, wobei x 3 bedeutet.

3. Verfahren nach einem der vorstehenden Ansprüche, wobei R¹ bis R⁶ Wasserstoffatome sind.

4. Verfahren nach einem der vorstehenden Ansprüche, wobei -(A)ₓ- eine Gruppe der Formel -CH₂-X-CH₂- bedeutet und -X- aus -O-, -S-, -SiR₂-, -NR- und -NC(O)R ausgewählt ist und R Wasserstoff, einen C₁₋₄ Alkylrest oder einen halogenierten C₁₋₄ Alkylrest bedeutet.

5. Verfahren nach Anspruch 1, wobei die Verbindung der allgemeinen Formel I aus 1,5-Hexadien, 1,6-Heptadien und 1,7-Octadien ausgewählt ist.

6. Verfahren nach Anspruch 1, wobei die Verbindung der allgemeinen Formel I aus Diallylether, Diallylamin, Diallylmethylamin, Diallylethylamin, N-Acetyldiallylamin, Diallylsulfid, Diallylsilan, Diallyldimethylsilan, Difurfurylether, Difurfurylamin, Bis(thiophen-2-ylmethyl)amin, Difurfurylsulfid und 1,3-Divinylbenzol ausgewählt ist.

7. Verfahren zur Herstellung einer Palladium(O)-haltigen Verbindung umfassend Umsetzung einer Palladiumverbindung mit einer oder mehreren Verbindungen der allgemeinen Formel II in Gegenwart einer Base: 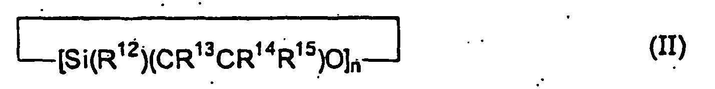 in der:
n eine ganze Zahl von 3 bis 20 bedeutet,
jedes R¹³ bis R¹⁵ unabhängig voneinander ausgewählt ist aus einem Wasserstoffatom, einem C₁₋₄-Alkylrest und einem halogenierten C₁₋₄-Alkylrest, und
jedes R¹² unabhängig voneinander aus Wasserstoff, einer Hydroxygruppe, einem substituierten oder unsubstituierten C₁₋₁₀ Alkylrest, einem -O-C₁₋₁₀ Alkylrest (wobei der Alkylrest substituiert oder unsubstituiert sein kann), einem substituierten oder unsubstituierten, einfach oder mehrfach ungesättigten C₁₋₁₀-Alkenylrest oder einem substituierten oder unsubstituierten, ggf. heteroatomenthaltenden C₅₋₁₀-Arylrest ausgewählt ist, wobei die Substituenten aus Halogen, C₁₋₁₀-Alkyl, O-C₁₋₁₀-Alkyl, Phenyl, O-Phenyl, OH, und halogeniertem C₁₋₁₀-Alkyl ausgewählt sind.

8. Verfahren nach Anspruch 7, wobei n eine ganze Zahl von 3 bis 6 bedeutet und jedes R¹² unabhängig voneinander ein C₁₋₄ Alkylrest oder ein halogenierter C₁₋₄ Alkylrest bedeutet.

9. Verfahren zur Herstellung einer Palladium(0)-haltigen Verbindung umfassend Umsetzung einer Palladiumverbindung mit einer oder mehreren Verbindungen der allgemeinen Formel III in Gegenwart einer Base:
Term-O-{[Si(R¹⁶)(CR¹⁹CR¹⁷R¹⁸)O]ᵥ[Si(R²⁰)₂O]_{w}}-Term (III)
in der:
v und w unabhängig voneinander 0 oder eine ganze Zahl von 1 bis 1000 bedeuten und wobei v+w von 0 bis 1000 ist,
jedes R¹⁶ unabhängig voneinander aus Wasserstoff, eine, Hydroxygruppe, einem halogenierten oder unsubstituierten C₁₋₁₀ Alkylrest, einem -O-C₁₋₁₀ Alkylrest (wobei der Alkylrest halogeniert oder unsubstituiert sein kann), einem einfach oder mehrfach ungesättigten C₁₋₁₀-Alkenylrest oder einem ggf. heteroatomenthaltenden C₅₋₁₀-Arylrest ausgewählt ist,
jedes R¹⁷ bis R¹⁹ unabhängig voneinander ausgewählt ist aus einem Wasserstoffatom, einem Halogenatom, einem C₁₋₄-Alkylrest und einem halogenierten C₁₋₄-Alkylrest,
jedes R²⁰ unabhängig voneinander aus Wasserstoff, eine Hydroxygruppe, einem halogenierten oder unsubstituierten C₁₋₁₀ Alkylrest, einem -O-C₁₋₁₀ Alkylrest (wobei der Alkylrest halogeniert oder unsubstituiert sein kann), einem einfach oder mehrfach ungesättigten C₁₋₁₀-Alkenylrest oder einem ggf. heteroatomenthaltenden C₅₋₁₀-Arylrest ausgewählt ist, und
jedes Term unabhängig voneinander (R¹⁶)₂(CR¹⁷R¹⁸CR¹⁹)Si- oder (R¹⁶)₃Si-bedeutet.

10. Verfahren nach Anspruch 9, wobei die Verbindung der allgemeinen Formel (III) die allgemeine Formel:
Term-O-[Si(R¹⁶)(CR¹⁹CR¹⁷R¹⁸)O]ᵥ-Term
aufweist, wobei R¹⁶ bis R¹⁹, Term und v wie in Anspruch 9 definiert sind.

11. Verfahren nach einem der Ansprüche 7 bis 10, wobei die Verbindung der allgemeinen Formel II bzw. III aus Divinyldisiloxan, 1,1,3,3-Tetramethyl-1,3-divinyldisiloxan, 1,1,3,3-Tetramethyl-1,3-dithien-2-yldisiloxan, 1,1,3,3-Tetramethoxy-1,3-divinyldisiloxan, 1,3-Dimethyl-1,3-divinyldisiloxandiol, 1,3,5,7-Tetravinyl-1,3,5,7-tetramethylcyclotetrasiloxan und 1,3,5-Trimethyl-1,3,5-trivinylcyclotrisiloxan ausgewählt ist.

12. Verfahren nach einem der Ansprüche 7 bis 10, wobei die Verbindung der allgemeinen Formel II bzw. III aus 1,1,3,3-Tetramethyl-1,3-divinyldisiloxan, 1,3,5,7-Tetravinyl-1,3,5,7-tetramethylcyclotetrasiloxan und 1,3,5-Trimethyl-1,3,5-trivinylcyclotrisiloxan ausgewählt ist.

13. Verfahren nach einem der vorstehenden Ansprüche, wobei die Palladiumverbindung aus PdX₂, PdX₄, M₂PdX₄, M₂PdX₆, (NH₃)₂PdX₂ und [Pd(NH₃)₄]X₂ ausgewählt ist, wobei M ein ein Wasserstoffatom, ein Alkalimetall oder NR*₄⁺ (R* = Wasserstoff, C₁₋₄ Alkyl) bedeutet und X ein Halogen oder NO₃-bedeutet.

14. Verfahren nach Anspruch 13, wobei X Chlor bedeutet.

15. Verfahren nach einem der vorstehenden Ansprüche, wobei die Umsetzung in Gegenwart eines Lösungsmittels oder Lösungsmittelgemisches erfolgt.

16. Verfahren nach Anspruch 15, wobei das Lösungsmittel aus Wasser, C₁₋₆-Alkoholen und C₂₋₆-Ethern sowie Gemischen davon ausgewählt ist.

17. Verfahren nach einem der vorstehenden Ansprüche, wobei die Base aus Alkalimetallsalzen, Erdalkalimetallsalzen und Ammoniumsalzen (Ammonium als NR₄⁺ mit R = H oder C₁₋₄ Alkyl) von Carbonaten, Hydrogencarbonaten und Hydroxiden ausgewählt ist.

18. Verfahren nach einem der vorstehenden Ansprüche, weiterhin umfassend einen Reinigungsschritt.

19. Verfahren nach einem der vorstehenden Ansprüche, weiterhin umfassend einen Konzentrationsschritt.

20. Verfahren nach einem der vorstehenden Ansprüche, wobei die Umsetzung der Palladiumverbindung mit einer oder mehreren Verbindungen der allgemeinen Formel I, II bzw. III in Gegenwart von einer oder mehreren von der Verbindung der allgemeinen Formel I, II bzw. III verschiedenen Liganden durchgeführt wird.

21. Verfahren nach einem der vorstehenden Ansprüche, weiterhin umfassend die Umsetzung der palladiumhaltigen Verbindung mit einer oder mehreren von der Verbindung der allgemeinen Formel I, II bzw. III verschiedenen Liganden.

22. Palladium(0)-haltigen Verbindung erhältlich nach einem Verfahren gemäß Anspruch 1, wobei die Verbindung der allgemeinen Formel I Hexadien oder Octadien ist.

23. Palladium(0)-haltigen Verbindung erhältlich nach einem Verfahren gemäß Anspruch 7, wobei die Verbindung der allgemeinen Formel II 1,3,5,7-Tetravinyl-1,3,5,7-tetramethylcyclotetrasiloxan ist.

## Claims

1. A method for the preparation of a palladium(0)-containing compound, comprising the reaction of a palladium compound with one or more compounds of the general formula I in the presence of a base: 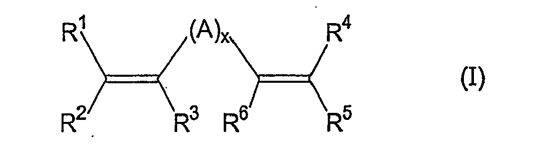 in which:
each A is independently a CR⁷R⁸ group, wherein one of the groups A may be oxygen, sulphur, a NR⁹ group or a SiR¹⁰R¹¹ group or wherein the groups A may be a member of a 5 to 20-membered ring system,
x is an integer from 2 to 4,
R¹ to R⁶ are independently selected from hydrogen, a C₁₋₄-alkyl group and a halogenated C₁₋₄-alkyl group,
each R⁷ and R⁸ is independently selected from hydrogen, a C₁₋₄-alkyl group and a halogenated C₁₋₄-alkyl group,
each R⁹ is independently selected from hydrogen, a C₁₋₄-alkyl group, a halogenated C₁₋₄-alkyl group, a -C(O)-C₁₋₄-alkyl group and a halogenated -C(O)-C₁₋₄-alkyl group, and
each R¹⁰ and R¹¹ is independently selected from a hydroxy group, a C₁₋₄-alkyl group, a -O-C₁₋₄-alkyl group, a halogenated C₁₋₄-alkyl group and a halogenated -O-C₁₋₄-alkyl group.

2. The method of claim 1, wherein x is 3.

3. The method of any one of the preceding claims, wherein R¹ to R⁶ are hydrogen.

4. The method of any one of the preceding claims, wherein -(A)ₓ- is a group of the formula -CH₂-X-CH₂- and -X- is selected from -O-, -S-, -SiR₂-, -NR- and -NC(O)R and R is hydrogen, a C₁₋₄-alkyl group or a halogenated C₁₋₄-alkyl group.

5. The method of claim 1, wherein the compound of the general formula I is selected from 1,5-hexadiene, 1,6-heptadiene and 1,7-octadiene.

6. The method of claim 1, wherein the compound of the general formula I is selected from diallylether, diallylamine, diallylmethylamine, diallylethylamine, N-acetyldiallylamine, diallylsulfide, diallylsilane, diallyldimethylsilane, difurfurylether, difurfurylamine, bis(thiophene-2-ylmethyl)amine, difurfurylsulfide and 1,3-divinylbenzene.

7. A method for the preparation of a palladium(0)-containing compound, comprising the reaction of a palladium compound with one or more compounds of the general formula II in the presence of a base: 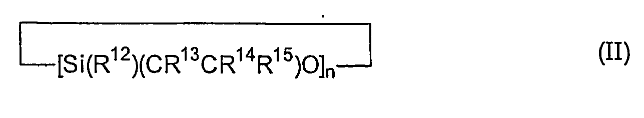 in which:
n is an integer from 3 to 20,
each R¹³ to R¹⁵ is independently selected from hydrogen, a C₁₋₄-alkyl group and a halogenated C₁₋₄-alkyl group, and
each R¹² is independently selected from hydrogen, a hydroxy group, a substituted or unsubstituted C₁₋₁₀-alkyl group, a -O-C₁₋₁₀-alkyl group (wherein the alkyl group may be substituted or unsubstituted), a substituted or unsubstituted, mono- or polyunsaturated C₁₋₁₀-alkenyl group or a substituted or unsubstituted, optionally heteroatom-containing C₅₋₁₀-aryl group, wherein the substituents are selected from halogen, C₁₋₁₀-alkyl, O-C₁₋₁₀-alkyl, phenyl, O-phenyl, OH, and halogenated C₁₋₁₀-alkyl.

8. The method of claim 7, wherein n is an integer from 3 to 6 and each R¹² is independently a C₁₋₄-alkyl group or a halogenated C₁₋₄-alkyl group.

9. A method for the preparation of a palladium(0)-containing compound, comprising the reaction of a palladium compound with one or more compounds of the general formula III in the presence of a base:
Term-O-{[Si(R¹⁶)(CR¹⁹CR¹⁷R¹⁸)O]ᵥ[Si(R²⁰)₂O]_{w}}-Term (III)
in which:
v and w are independently 0 or an integer from 1 to 1000 and wherein v+w is from 0 to 1000,
each R¹⁶ is independently selected from hydrogen, a hydroxy group, a halogenated or unsubstituted C₁₋₁₀-alkyl group, a -O-C₁₋₁₀-alkyl group (wherein the alkyl group may be halogenated or unsubstituted), a mono- or polyunsaturated C₁₋₁₀-alkenyl group or an optionally heteroatom-containing C₅₋₁₀-aryl group,
each R¹⁷ to R¹⁹ is independently selected from hydrogen, halogen, a C₁₋₄-alkyl group and a halogenated C₁₋₄-alkyl group,
each R²⁰ is independently selected from hydrogen, a hydroxy group, a halogenated or unsubstituted C₁₋₁₀-alkyl group, a -O-C₁₋₁₀-alkyl group (wherein the alkyl group may be halogenated or unsubstituted), a mono- or polyunsaturated C₁₋₁₀-alkenyl group or an optionally heteroatom-containing C₅₋₁₀-aryl group, and
each Term is independently (R¹⁶)₂(CR¹⁷R¹⁸CR¹⁹)Si- or (R¹⁶)₃Si-.

10. The method of claim 9, wherein the compound of the general formula (III) has the general formula:
Term-O-[Si(R¹⁶)(CR¹⁹CR¹⁷R¹⁸)O]ᵥ-Term
wherein R¹⁶ to R¹⁹, Term and v are as defined in claim 9.

11. The method of any one of claims 7 to 10, wherein the compound of the general formula II and III, respectively, is selected from divinyldisiloxane, 1,1,3,3-tetramethyl-1,3-divinyldisiloxane, 1,1,3,3-tetramethyl-1,3-dithien-2-yldisiloxane, 1,1,3,3-tetramethoxy-1,3-divinyldisiloxane, 1,3-dimethyl-1,3-divinyldisiloxanediol, 1,3,5,7-tetravinyl-1,3,5,7-tetramethylcyclotetrasiloxane and 1,3,5-trimethyl-1,3,5-trivinylcyclotrisiloxane.

12. The method of any one of claims 7 to 10, wherein the compound of the general formula II and III, respectively, is selected from 1,1,3,3-tetramethyl-1,3-divinyldisiloxane, 1,3,5,7-tetravinyl-1,3,5,7-tetramethylcyclotetrasiloxane and 1,3,5-trimethyl-1,3,5-trivinylcyclotrisiloxane.

13. The method of any one of the preceding claims, wherein the palladium compound is selected from PdX₂, PdX₄, M₂PdX₄, M₂PdX₆, (NH₃)₂PdX₂ and [Pd(NH₃)₄]X₂, wherein M is hydrogen, an alkali metal or NR*₄⁺ (R* = hydrogen, C₁₋₄-alkyl) and X is halogen or NO₃⁻.

14. The method of claim 13, wherein X is chlorine.

15. The method of any one of the preceding claims, wherein the reaction is carried out in the presence of a solvent or a solvent mixture.

16. The method of claim 15, wherein the solvent is selected from water, C₁₋₆-alcohols and C₂₋₆-ethers as well as mixtures thereof.

17. The method of any one of the preceding claims, wherein the base is selected from alkali metal salts, alkaline earth metal salts and ammonium salts (ammonium as NR₄⁺ wherein R = H or C₁₋₄-alkyl) of carbonates, hydrogencarbonates and hydroxides.

18. The method of any one of the preceding claims, further comprising a purification step.

19. The method of any one of the preceding claims, further comprising a concentration step.

20. The method of any one of the preceding claims, wherein the reaction of the palladium compound with one or more compounds of the general formula I, II and III, respectively, is carried out in the presence of one or more ligands different from the compound of the general formula I, II and III, respectively.

21. The method of any one of the preceding claims, further comprising the reaction of the palladium-containing compound with one or more ligands different from the compound of the general formula I, II and III, respectively.

22. A palladium(0)-containing compound obtainable by a method according to claim 1, wherein the compound of the general formula I is hexadiene or octadiene.

23. A palladium(0)-containing compound obtainable by a method according to claim 7, wherein the compound of the general formula II is 1,3,5,7-tetravinyl-1,3,5,7-tetramethylcyclotetrasiloxane.

## Revendications

1. Procédé de production d'un composé contenant du palladium(0) comprenant la conversion d'un composé de palladium avec un ou plusieurs composés de formule générale I en présence d'une base : 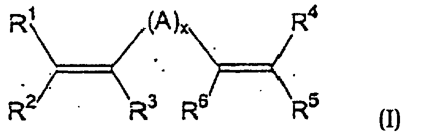 dans laquelle :
chaque A représente, indépendamment l'un de l'autre, un radical CR⁷R⁸, l'un des radicaux A pouvant représenter de l'oxygène, du soufre, un groupe NR⁹ ou un groupe SIR¹⁰R¹¹ ou les radicaux A pouvant faire partie d'un système cyclique comportant de 5 à 20 chaînons,
x est un nombre entier de 2 à 4,
R¹ à R⁶ sont choisis, indépendamment l'un de l'autre, parmi un atome d'hydrogène, un radical alkyle en C₁₋₄ et un radical alkyle en C₁₋₄ halogéné,
chaque R⁷ et R⁸, indépendamment l'un de l'autre, est choisi parmi un atome d'hydrogène, un radical alkyle en C₁₋₄ et un radical alkyle en C₁₋₄ halogéné,
chaque R⁹, indépendamment l'un de l'autre est choisi parmi un atome d'hydrogène, un radical alkyle en C₁₋₄ et un radical alkyle en C₁₋₄ halogéné, un radical -C(O)- alkyle en C₁₋₄ et un radical alkyle en C₁₋₄ -C(O)-halogéné,
chaque R¹⁰ et R¹¹, indépendamment l'un de l'autre, est choisi parmi un groupe hydroxyle, un radical alkyle en C₁₋₄, un radical -O- alkyle en C₁₋₄, un radical alkyle en C₁₋₄halogéné, et un radical alkyle en C₁₋₄ -(O)- halogéné.

2. Procédé selon la revendication 1,
dans lequel x est égal à 3.

3. Procédé selon l'une quelconque des revendications précédentes,
dans lequel R¹ à R⁶ sont des atomes d'hydrogène.

4. Procédé selon l'une quelconque des revendications précédentes,
dans lequel -(A)ₓ- représente un groupe de formule -CH₂-X-CH₂-, et -X- est choisi parmi -O-, -S-, -SiR₂-, -NR- et -NC(O)R et R représente un atome d'hydrogène, un radical alkyle en C₁₋₄ ou un radical alkyle en C₁₋₄ halogéné.

5. Procédé selon la revendication 1,
dans lequel le composé de formule générale I est choisi parmi le 1,5-hexadiène, le 1,6-heptadiène et le 1,7-octadiène.

6. Procédé selon la revendication 1,
dans lequel le composé de formule générale I est choisi parmi l'éther diallylique, la diallylamine, la diallyméthylamine, la diallyéthylamine, la N-acétyldiallylamine, le sulfure de diallyle, le diallylsilane, le diallyldiméthylsilane, l'éther difurfurylique, la difurfurylamine, la bis(thiophén-2-ylméthyl)amine, le sulfure de difurfuryle et le 1,3-divinylbenzène.

7. Procédé de production d'un composé contenant du palladium(0) comprenant la conversion d'un composé de palladium avec un ou plusieurs composés de formule générale II en présence d'une base : 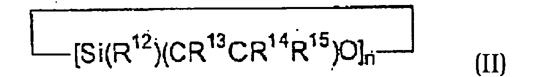 dans laquelle
n est un nombre entier de 3 à 20,
chaque R¹³ à R¹⁵, indépendamment l'un de l'autre, est choisi parmi un atome d'hydrogène, un radical alkyle en C₁₋₄ et un radical alkyle en C₁₋₄ halogéné et
chaque R¹², indépendamment l'un de l'autre, est choisi parmi l'hydrogène, un groupe hydroxy, un radical alkyle en C₁₋₁₀ substitué ou non substitué, un radical -O- alkyle en C₁₋₁₀ (le radical alkyle pouvant être substitué ou non substitué), un radical alcényle en C₁₋₁₀ substitué ou non substitué, monoinsaturé ou polyinsaturé ou un radical aryle en C₅₋₁₀ substitué ou non substitué, contenant, le cas échéant, des hétéroatomes, les substituants étant choisis parmi l'halogène, l'alkyle en C₁₋₁₀, le O-alkyle en C₁₋₁₀, le phényle, le O-phényle, l'OH et l'alkyle en C₁₋₁₀ halogéné.

8. Procédé selon la revendication 7,
dans lequel n est un nombre entier de 3 à 6 et chaque R¹², indépendamment l'un de l'autre, est un radical alkyle en C₁₋₄ ou un radical alkyle en C₁₋₄ halogéné.

9. Procédé de production d'un composé contenant du palladium(0) comprenant la conversion d'un composé de palladium avec un ou plusieurs composés de formule générale III en présence d'une base :
Terme-O-{[Si(R¹⁶)(CR¹⁹CR¹⁷R¹⁸)O]v[Si(R²⁰)₂O_{w}}-Terme (III)
dans laquelle :
v et w, indépendamment l'un de l'autre, sont égaux à 0 ou sont un nombre entier de 1 à 1 000 et v+w est égal de 0 à 1 000,
chaque R¹⁶, indépendamment l'un de l'autre, est choisi parmi l'hydrogène, un groupe hydroxy, un radical alkyle en C₁₋₁₀ halogéné ou non substitué, un radical -O- alkyle en C₁₋₁₀ (le radical alkyle pouvant être halogéné ou non substitué), un radical alcényle en C₁₋₁₀ monoinsaturé ou polyinsaturé ou un radical aryle en C₅₋₁₀ contenant, le cas échéant, des hétéroatomes,
chaque R¹⁷ à R¹⁹, indépendamment l'un de l'autre, est choisi parmi un atome d'hydrogène, un atome d'halogène, un radical alkyle en C₁₋₄ et un radical alkyle en C₁₋₄ halogéné,
chaque R²⁰, indépendamment l'un de l'autre, est choisi parmi l'hydrogène, un groupe hydroxy, un radical alkyle en C₁₋₁₀ halogéné ou non substitué, un radical -O- alkyle en C₁₋₁₀(le radical alkyle pouvant être halogéné ou non substitué), un radical alcényle en C₁₋₁₀ monoinsaturé ou polyinsaturé ou un radical aryle en C₅₋₁₀ contenant, le cas échéant, des hétéroatomes,
et chaque terme, indépendamment l'un de l'autre, représente (R¹⁶)₂(CR¹⁷R¹⁸CR¹⁹)Si- ou (R¹⁶)₃Si-.

10. Procédé selon la revendication 9,
dans lequel le composé de formule générale (III) présente la formule générale :
Terme-O-[Si(R¹⁶)(CR¹⁹CR¹⁹R¹⁸)O]ᵥ-terme
dans laquelle
R¹⁶ à R¹⁹, terme et v ont la signification telle que définie dans la revendication 9.

11. Procédé selon l'une quelconque des revendications 7 à 10,
dans laquelle le composé de formule générale II ou III est choisi parmi le divinyldisiloxane, le 1,1,3,3-tétraméthyl-1,3,divinyldisfloxane, le 1,1,3,-3-tétraméthyl-1,3-dithién-2-yldisiloxane, le 1,1,3,3-tétraméthoxy-1,3-divinyldisiloxane, le 1, 3-diméthyl-1, 3-divinyldisiloxane diol, le 1, 3, 5, 7-tétravinyl-1,3,5,7-tétraméthylcyclotétrasiloxane et le 1,3,5-triméthyl-1,3,5-trivinylcyclotrisiloxane.

12. Procédé selon l'une quelconque des revendications 7 à 10,
dans lequel le composé de formule générale II ou III est choisi parmi le 1,13,3-tétraméthyl-1,3-divinyldisiloxane, le 1,3,5,7-tétravinyl-1,3,5,7-tétraméthylcyclotétrasiloxane et le 1,3,5-triméthyl-1,3,5-trivinylcyclotrisiloxane.

13. Procédé selon l'une quelconque des revendications précédentes,
dans lequel le composé de palladium est choisi parmi le PdX₂, le PdX₄, le M₂PdX₄, le M₂PdX₆, le (NH₃)₂PdX₂ et le [Pd(NH₃)₄]X₂, M représentant un atome d'hydrogène, un métal alcalin ou NR*₄+ (R* = hydrogène, alkyle en C₁₋₄) et X un halogène ou NO₃⁻.

14. Procédé selon la revendication 13,
dans lequel X représente du chlore.

15. Procédé selon l'une quelconque des revendications précédentes,
dans lequel la conversion est réalisée en présence d'un solvant ou d'un mélange de solvants.

16. Procédé selon la revendication 15,
dans lequel le solvant est choisi parmi l'eau, des alcools en C₁₋₆ et l'éther en C₂₋₆ ainsi que des mélanges de ceux-ci.

17. Procédé selon l'une quelconque des revendications précédentes,
dans lequel la base est choisie parmi les sels de métaux alcalins, les sels de métaux alcalino-terreux et les sels d'ammonium (ammonium en tant que NR₄⁺ avec R = H ou alkyle C₁₋₄) de carbonates, d'hydrogénocarbonates et d'hydroxydes.

18. Procédé selon l'une quelconque des revendications précédentes comprenant en outre une étape de purification.

19. Procédé selon l'une quelconque des revendications précédentes comprenant en outre une étape de concentration.

20. Procédé selon l'une quelconque des revendications précédentes,
dans lequel la conversion du composé de palladium est réalisée avec un
ou plusieurs composés de formule générale I, II ou III en présence d'un ou plusieurs ligands différents du composé de formule générale I, II ou III.

21. Procédé selon l'une quelconque des revendications précédentes comprenant en outre la conversion du composé contenant du palladium avec un ou plusieurs ligands différents du composé de formule générale I, II ou III.

22. Composé contenant du palladium(0),
susceptible d'être obtenu avec un procédé selon la formule 1, le composé de formule générale I étant de l'hexadiène ou de l'octadiène.

23. Composé contenant du palladium(0),
susceptible d'être obtenu avec un procédé selon la revendication 7, le composé de formule générale II étant du 1,3,5,7-tétravinyl-1,3,5,7-tétraméthylcyclotétrasiloxane.
